# DEMANDE DE BREVET EUROPEEN

(11) **EP 1 914 183 A1**
(43) Date de publication de la demande: **23.04.2008**
(21) Numéro de dépôt: 07020210.6
(22) Date de dépôt: 16.10.2007
(51) Int. Cl.: B65G 51/01

(54) **Dispositif de mise en ligne de produits**

(30) Priorité: 16.10.2006 FR 0609102
(71) Demandeur: Fachaux, Jean, 18110 Saint Martin D'Auxigny (FR)
(72) Inventeur: Fachaux, Jean, 18110 Saint Martin D'Auxigny (FR)
(74) Mandataire: Maillet, Alain

(57) **Abrégé**

L'invention concerne un dispositif de mise en ligne (100) de produits (102) comprenant :
- une cuve de réception (108) comportant au moins une goulotte d'alignement (112),
- un dispositif d'alimentation en eau (180) alimentant ladite cuve de réception (108) en eau par l'intermédiaire d'une canalisation d'alimentation (156) débouchant en amont de la ou desdites goulottes (112), et
- un dispositif d'alimentation en produits (150), distinct du dispositif d'alimentation en eau (180), comprenant un réservoir (104) rempli d'eau et de produits (102) et un dispositif de déversement prévu pour prendre les produits (102) dans ledit réservoir (104) et les déverser en amont de la ou desdites goulottes (112).

## Description

La présente invention concerne un dispositif de mise en ligne de produits comme par exemple des fruits et des légumes.

Dans l'industrie du fruit, les fruits doivent être transportés à travers différentes étapes. Certaines de ces étapes, comme par exemple le calibrage, nécessitent que les fruits soient disposés en ligne.

On connaît un dispositif de mise en ligne de fruits, et en particulier de cerises, qui comprend un réservoir rempli d'eau dans lequel les cerises sont déversées, une pompe hydraulique, une cuve de réception et un dispositif d'alignement. La pompe hydraulique est reliée à la base du réservoir par l'intermédiaire d'une canalisation d'aspiration et à la cuve de réception par l'intermédiaire d'une canalisation de refoulement. Le dispositif d'alignement comprend une série de goulottes qui s'étendent à partir de la cuve de réception et qui se présentent sous la forme d'une canalisation dont la section diminue dans le sens de déplacement des cerises, permettant ainsi une mise en ligne des cerises.

Un dispositif de séparation peut être disposé en sortie de chaque goulotte afin de séparer des cerises arrivant en tas. Le dispositif de séparation peut être une brosse rotative tournant dans le sens de progression des cerises dans les goulottes.

En sortie de chaque goulotte est prévu un moyen de convoyage, par exemple, du type tapis transporteur à bande, qui récupère les cerises en sortie de goulotte pour les convoyer jusqu'à une autre machine de traitement, comme par exemple une calibreuse.

Les cerises et l'eau sont donc aspirées par la pompe hydraulique à partir du réservoir et refoulées dans la cuve de réception. Les cerises se répartissent entre les différentes goulottes et viennent alimenter les moyens de convoyage.

Bien que le débit de la pompe hydraulique puisse être modulé afin de garantir un débit de cerises constant au niveau des goulottes, il arrive parfois que des cerises s'agglutinent dans une goulotte au risque de la boucher.

Un objet de la présente invention est de proposer un dispositif de mise en ligne de produits qui ne présente pas les inconvénients de l'art antérieur, et qui, en particulier, permet d'alimenter chaque goulotte avec une quantité de fruits telle qu'ils ne puissent pas s'agglutiner.

A cet effet, est proposé un dispositif de mise en ligne de produits comprenant :
- une cuve de réception comportant au moins une goulotte d'alignement,
- un dispositif d'alimentation en eau alimentant ladite cuve de réception en eau par l'intermédiaire d'une canalisation d'alimentation débouchant en amont de la ou desdites goulottes, et
- un dispositif d'alimentation en produits, distinct du dispositif d'alimentation en eau, comprenant un réservoir rempli d'eau et de produits et un dispositif de déversement prévu pour prendre les produits dans ledit réservoir et les déverser en amont de la ou desdites goulottes.

Avantageusement, les produits sont déversés en aval de l'embouchure de la canalisation d'alimentation.

Selon un mode de réalisation particulier de l'invention, le dispositif de déversement comprend un tapis élévateur dont la partie basse plonge dans ledit réservoir et dont la partie haute surplombe ladite cuve de réception.

Selon un autre mode de réalisation particulier de l'invention, le dispositif de déversement comprend :
- un plateau de réception comprenant des moyens pour évacuer l'eau et des moyens pour transporter lesdits produits au-dessus de ladite cuve de réception, et
- une pompe hydraulique prévue pour aspirer l'eau et les produits depuis le réservoir par une canalisation d'aspiration et les refouler sur le plateau de réception par une canalisation de refoulement.

Avantageusement, le dispositif d'alimentation en eau comprend une pompe hydraulique qui alimente la canalisation d'alimentation en eau depuis un réservoir de pompage.

Avantageusement, ledit réservoir de pompage est le réservoir rempli d'eau et de produits.

Avantageusement, le dispositif d'alimentation en eau comprend une canalisation de déviation, un filtre et une vanne de réglage du débit montée sur ladite canalisation de déviation, la canalisation de déviation étant branchée entre la canalisation de refoulement et la canalisation d'alimentation, le filtre étant placé à l'intersection de la canalisation de déviation et la canalisation de refoulement.

Avantageusement, le dispositif d'alimentation en eau comprend une pompe hydraulique alimentée en eau depuis le réservoir.

Avantageusement, le dispositif de mise en ligne comprend des moyens de récupération disposés sous le parcours de l'eau et des produits afin de récupérer l'eau et les produits qui sont éjectés et de les rediriger vers le réservoir.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de dessus d'un dispositif de mise en ligne de produits selon un premier mode de réalisation de l'invention,
la Fig. 2 représente une vue de côté du dispositif de mise en ligne de produits selon le premier mode de réalisation, et
la Fig. 3 représente une vue de côté d'un dispositif de mise en ligne de produits selon un deuxième mode de réalisation.

La suite de la description fait uniquement référence à l'utilisation de l'invention pour aligner des fruits mais l'invention s'applique de la même manière pour d'autres produits comme par exemple des légumes, dans la mesure où ils peuvent être entraînés par un fluide comme de l'eau. Les fruits représentés sur les Figs. sont des cerises. Les termes relatifs à une position comme par exemple "amont" ou "aval" s'entendent en référence au sens de déplacement des cerises dans le dispositif de mise en ligne.

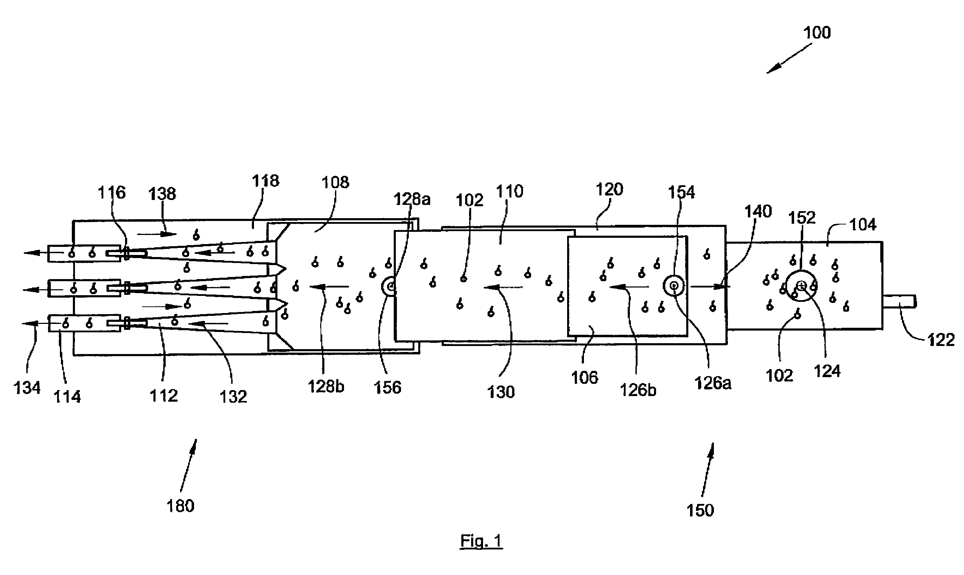

La Fig. 1 représente un dispositif de mise en ligne 100 comprenant :
- une cuve de réception 108 comportant au moins une goulotte d'alignement 112,
- un dispositif d'alimentation en eau 180 alimentant la cuve de réception 108 en eau par l'intermédiaire d'une canalisation d'alimentation 156 débouchant en amont de la ou des goulottes 112, et
- un dispositif d'alimentation en cerises 150, distinct du dispositif d'alimentation en eau 180, et comprenant un réservoir 104 rempli d'eau et de cerises 102 et un dispositif de déversement prévu pour prendre les cerises 102 dans le réservoir 104 et les déverser en amont de la ou des goulottes 112.

Le dispositif d'alimentation en cerises 150 et le dispositif d'alimentation en eau 180 sont distincts car ils peuvent être commandés indépendamment l'un de l'autre. Par exemple lorsque beaucoup de cerises 102 sont prises par le dispositif de déversement, le courant d'eau généré par le dispositif d'alimentation en eau 180 peut être augmenté pour permettre une meilleure évacuation des cerises 102 par les goulottes d'alignement 112. Au contraire, lorsqu'il y a peu de cerises, le débit d'eau peut être réduit pour éviter une trop forte consommation d'eau. Ainsi, les goulottes d'alignement 112 peuvent être alimentées avec une quantité de cerises 102 telle qu'elles ne puissent pas s'agglutiner.

Afin de commander le débit de chaque dispositif d'alimentation, des moyens de commandes sont prévus et permettent à un technicien surveillant la machine de réguler indépendamment chaque débit et éviter ainsi l'accumulation de cerises dans les goulottes d'alignement 112.

Il est également possible d'utiliser des moyens de contrôle automatique, comme par exemple, une caméra. La caméra est disposée de manière à filmer les cerises 102 en sortie du dispositif d'alimentation en cerises 150 et les moyens de contrôle automatique comprennent des moyens permettant l'évaluation du nombre de cerises. En fonction de ce nombre, les moyens de contrôle automatique commandent le débit d'eau en agissant sur le dispositif d'alimentation en eau 180.

Dans le mode de réalisation représenté sur la Fig. 1, il y a trois goulottes d'alignement 112, chacune prenant la forme d'une canalisation ouverte sur le dessus et présentant une section qui diminue dans le sens de déplacement des cerises 102, permettant ainsi une mise en ligne des cerises 102.

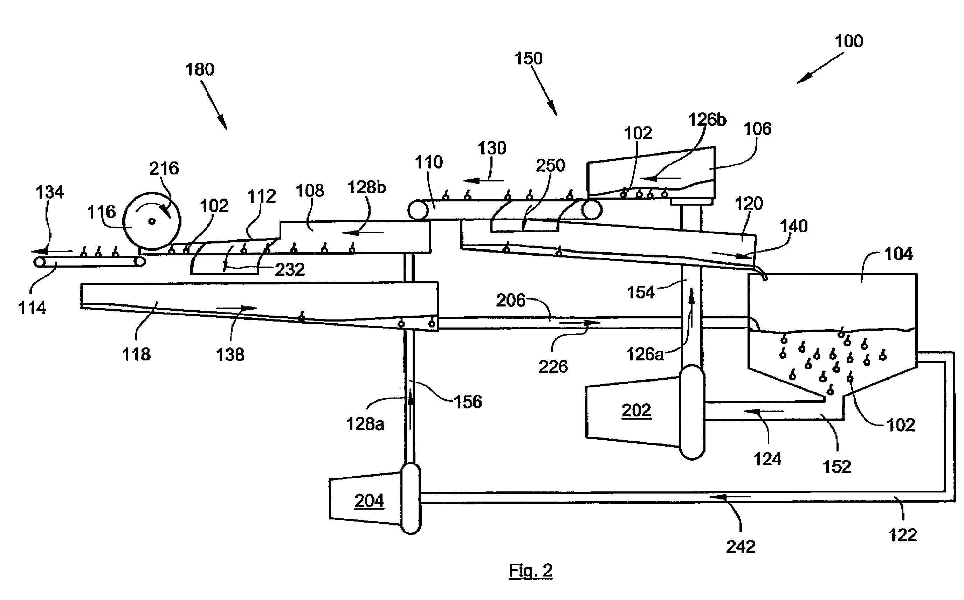

Comme cela est mieux vu sur la Fig. 2, le dispositif de déversement comprend :
- un plateau de réception 106, 110 comprenant des moyens pour évacuer l'eau et des moyens pour transporter les cerises 102 au-dessus de la cuve de réception 108, et
- une première pompe hydraulique 202 prévue pour aspirer l'eau et les cerises 102 depuis le réservoir 104 par une canalisation d'aspiration 152 et les refouler sur le plateau de réception 106, 110 par une canalisation de refoulement 154.

Le plateau de réception se présente ici sous la forme d'un tapis de convoyage 110 et d'une cuve de transit 106 ouverte vers le tapis de convoyage 110.

Le parcours des cerises 102 est le suivant.

Les cerises 102 et l'eau qui sont dans le réservoir 104 sont entraînées dans la canalisation d'aspiration 152 (flèche 124) par la première pompe hydraulique 202 puis sont refoulées dans la canalisation de refoulement 154 (flèche 126a). En particulier, on note que pour faire monter les cerises 102 dans la canalisation de refoulement 154, le débit de la première pompe hydraulique 202 doit être supérieur à un débit minimum. Ce débit est tel qu'une grande quantité d'eau est transportée par la première pompe hydraulique 202, ce qui crée un déséquilibre entre la quantité d'eau et la quantité de cerises 102.

La canalisation de refoulement 154 débouche dans la cuve de transit 106 et les cerises 102 et l'eau s'évacuent vers le tapis de convoyage 110 (flèche 126b). Sur le tapis de convoyage 110, l'eau s'évacue (flèche 250) tandis que les cerises 102 sont transportées (flèche 130) et relâchées au-dessus de la cuve de réception 108. Le tapis de convoyage 110 forme ainsi les moyens pour évacuer l'eau et les moyens pour transporter les cerises 102. Seules les cerises 102 arrivent donc dans la cuve de réception 108 où elles sont amenées par le dispositif d'alimentation en cerises 150.

Le dispositif d'alimentation en eau 180 comprend une pompe hydraulique 204, dite deuxième pompe hydraulique, alimentée en eau depuis un réservoir de pompage au travers d'une canalisation de pompage 122 (flèche 242). L'eau ainsi pompée est expulsée au travers de la canalisation d'alimentation 156 (flèche 128a) dans la cuve de réception 108.

Les cerises 102 arrivant dans la cuve de réception 108 sont entraînées par l'eau ainsi expulsée (flèche 128b) en direction des goulottes d'alignement 112 (flèche 132). Du fait de la réduction de section des goulottes 112, l'eau est évacuée (flèche 232) par débordement.

En sortie de chaque goulotte 112, il peut être prévu une brosse 116 qui est animée d'un mouvement de rotation 216.

En aval de chaque goulotte 112 est également prévu un moyen de convoyage 114 qui récupère les cerises 102 en sortie de goulottes 112 pour les convoyer dans le sens de la flèche 134 jusqu'à une autre machine de traitement, comme par exemple une calibreuse.

Afin de capter les cerises 102, la canalisation d'aspiration 152 est connectée à la base du réservoir 104.

Afin de limiter le nombre de réservoirs, le réservoir 104 et le réservoir de pompage sont confondus. Pour éviter que des cerises 102 soient pompées par la deuxième pompe hydraulique 204, la canalisation de pompage 122 est connectée à la partie haute du réservoir 104. Afin de renforcer cette impossibilité de passage des cerises 102 dans la canalisation de pompage 122, un filtre peut être ajouté au niveau de la jonction de la canalisation de pompage 122 avec le réservoir 104.

Afin de faciliter l'entraînement des cerises 102 dans la cuve de réception 108, il est préférable que les cerises 102 soient déversées en aval de l'embouchure de la canalisation d'alimentation 156.

L'utilisation d'eau pour convoyer les cerises 102 évite de les abîmer.

Afin d'économiser l'eau, le dispositif de mise en ligne 100 comprend des moyens de récupération 120, 118 disposés sous le parcours de l'eau afin de la récupérer et de la rediriger vers le réservoir 104.

Chaque moyen de récupération prend la forme d'un bac.

Sous le tapis de convoyage 110 est prévu un premier bac 120 qui est en pente et qui ramène l'eau directement au-dessus du réservoir 104 (flèche 140).

Sous les goulottes 112 et sous les moyens de convoyage 114 est prévu un deuxième bac 118 qui est en pente et qui ramène l'eau dans le réservoir 104 au travers d'une canalisation de retour 206 (flèches 138 et 226).

En même temps que l'eau, des cerises 102 peuvent également être éjectées du parcours normal en suivant l'eau (flèches 250 et 232). Les moyens de récupération 120, 118 permettent de les récupérer et de les rediriger vers le réservoir 104 où elles peuvent reprendre un cycle normal.

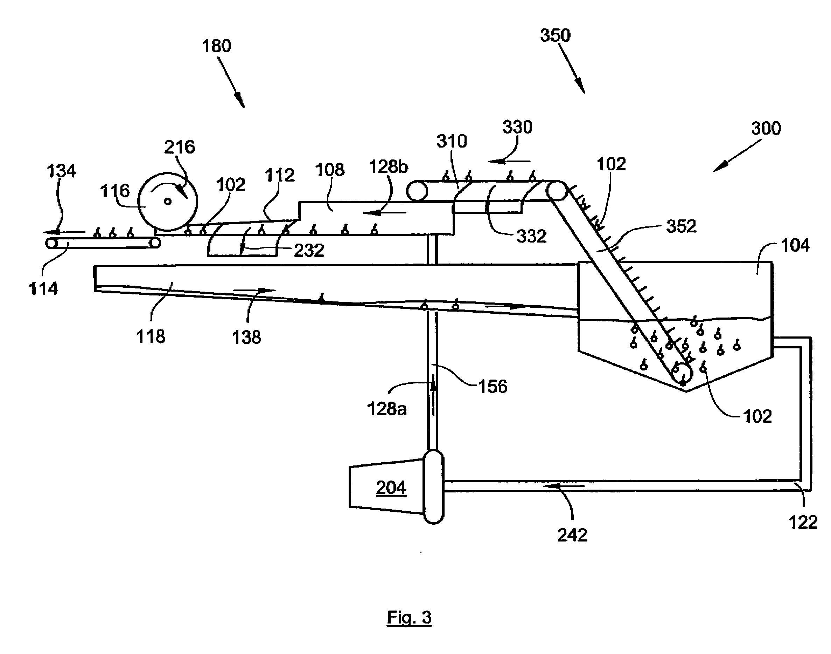

La Fig. 3 représente un autre mode de réalisation de l'invention. Le dispositif d'alimentation en eau 180 est identique à celui du mode de réalisation précédent mais le dispositif d'alimentation en cerises 350 est différent.

Le dispositif d'alimentation en cerises 350 comprend le réservoir 104 et un dispositif de déversement comprenant un tapis élévateur 352, 310 dont la partie basse plonge dans le réservoir 104 et dont la partie haute surplombe la cuve de réception 108.

Selon un mode de réalisation particulier, le tapis élévateur se compose ici d'un tapis à tasseaux 352 montant et d'un tapis de convoyage 310 sensiblement horizontal. Le tapis à tasseaux 352 plonge dans le réservoir 104 et permet de monter les cerises 102 jusqu'au tapis de convoyage 310 qui amène (flèche 330) les cerises 102 au-dessus de la cuve de réception 108.

L'eau s'évacue au cours de la montée sur le tapis de convoyage 310 (flèche 332).

Cet agencement permet de modifier le nombre de cerises 102 en modifiant la vitesse de défilement du dispositif de déversement par rapport au débit d'eau du dispositif d'alimentation en eau 180.

Les moyens de récupération se composent ici d'un bac 318 disposé sous le parcours de l'eau et des cerises 102 afin de les récupérer et de les rediriger vers le réservoir 104 (flèche 338).

Bien entendu, la présente invention n'est pas limitée aux exemples et modes de réalisation décrits et représentés mais elle est susceptible de nombreuses variantes accessibles à l'homme de fart.

Par exemple, le dispositif d'alimentation en eau peut comprendre une canalisation de déviation, un filtre et une vanne de réglage du débit montée sur ladite canalisation de déviation, la canalisation de déviation étant branchée entre la canalisation de refoulement 154 et la canalisation d'alimentation 156, le filtre étant placé à l'intersection de la canalisation de déviation et la canalisation de refoulement 154. Seule la première pompe hydraulique 202 est alors utilisée et il est possible de commander le débit de cerises 102 et le débit de l'eau indépendamment l'un de l'autre en modifiant l'ouverture de la vanne de réglage.

## Revendications

1. Dispositif de mise en ligne (100) de produits (102) comprenant :
- une cuve de réception (108) comportant au moins une goulotte d'alignement (112),
- un dispositif d'alimentation en eau (180) alimentant ladite cuve de réception (108) en eau par l'intermédiaire d'une canalisation d'alimentation (156) débouchant en amont de la ou desdites goulottes (112),
- un dispositif d'alimentation en produits (150, 350), distinct du dispositif d'alimentation en eau (180), comprenant un réservoir (104) rempli d'eau et de produits (102) et un dispositif de déversement prévu pour prendre les produits (102) dans ledit réservoir (104) et les déverser en amont de la ou desdites goulottes (112), et
- des moyens de commande permettant de régler le débit de chaque dispositif d'alimentation (180, 150, 350) indépendamment l'un de l'autre.

2. Dispositif de mise en ligne (100) selon la revendication 1, **caractérisé en ce que** les produits (102) sont déversés en aval de l'embouchure de la canalisation d'alimentation (156).

3. Dispositif de mise en ligne (100) selon l'une des revendications 1 ou 2, **caractérisé en ce que** le dispositif de déversement comprend un tapis élévateur (352, 310) dont la partie basse plonge dans ledit réservoir (104) et dont la partie haute surplombe ladite cuve de réception (108).

4. Dispositif de mise en ligne (100) selon l'une des revendications 1 ou 2, **caractérisé en ce que** le dispositif de déversement comprend :
- un plateau de réception (106, 110) comprenant des moyens pour évacuer l'eau et des moyens pour transporter lesdits produits (102) au-dessus de ladite cuve de réception (108), et
- une pompe hydraulique (202) prévue pour aspirer l'eau et les produits (102) depuis le réservoir (104) par une canalisation d'aspiration (152) et les refouler sur le plateau de réception (106, 110) par une canalisation de refoulement (154).

5. Dispositif de mise en ligne (100) selon l'une des revendications 3 ou 4, **caractérisé en ce que** le dispositif d'alimentation en eau (180) comprend une pompe hydraulique (204) qui alimente la canalisation d'alimentation (156) en eau depuis un réservoir de pompage.

6. Dispositif de mise en ligne (100) selon la revendication 5, **caractérisé en ce que** ledit réservoir de pompage est le réservoir (104) rempli d'eau et de produits (102).

7. Dispositif de mise en ligne (100) selon la revendication 4, **caractérisé en ce que** le dispositif d'alimentation en eau (180) comprend une canalisation de déviation, un filtre et une vanne de réglage du débit montée sur ladite canalisation de déviation, la canalisation de déviation étant branchée entre la canalisation de refoulement (154) et la canalisation d'alimentation (156), le filtre étant placé à l'intersection de la canalisation de déviation et la canalisation de refoulement (154).

8. Dispositif de mise en ligne (100) selon l'une des revendications 1 à 7, **caractérisé en ce qu'**il comprend des moyens de récupération (120, 118, 318) disposés sous le parcours de l'eau et des produits (102) afin de récupérer l'eau et les produits (102) qui sont éjectés et de les rediriger vers le réservoir (104).
